# EUROPEAN PATENT APPLICATION

(11) **EP 3 760 977 A1**
(43) Date of publication of application: **06.01.2021**
(21) Application number: 20182735.9
(22) Date of filing: 26.06.2020
(51) Int. Cl.: G01C 23/00

(54) **SELF-CONTAINED SMALL AVIONICS SYSTEMS**

(30) Priority: 01.07.2019 US 201962869246 P
(71) Applicant: Honeywell International Inc., Morris Plains, NJ 07950 (US)
(72) Inventor: ELTOHAMY, Khaled, Morris Plains, NJ New Jersey 07950 (US); ZONOOZI, Farhang, Morris Plains, NJ New Jersey 07950 (US)
(74) Representative: Haseltine Lake Kempner LLP

(57) **Abstract**

An environment may comprise a plurality of self-contained small vehicle systems, each of the self-contained small vehicle systems comprising: a display system having a display, a processor operably coupled to the display, and a nonvolatile memory including executable code operably coupled to the processor, and a sensor operably coupled to the display system.

## Description

### TECHNICAL FIELD

Various embodiments of the present disclosure generally relate to small avionics systems and, more particularly, to sets of self-contained small avionics systems which are installed together to provide desired redundancy.

### BACKGROUND

Standard avionics system design practices are dependent on the class of the airplane for which the system is being certified. For example, a part 23 class I or class II aircraft will only require a single display system with a single sensor. A part 23 class III aircraft will require at least two displays with two sensors or a single integrated Modular Avionics (IMA) system with dual sensors. A part 23 class IV or part 25 systems will require at least four displays and two IMAs along with several sets of dual sensors.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF DISCLOSURE

According to certain aspects of the disclosure, systems are disclosed to provide self-contained small avionics systems that are capable of being installed based on the aircraft size requirement.

In one embodiment, a self-contained small avionics system is disclosed. The self-contained small avionics system may include at least one display including: one or more processors; a nonvolatile memory including executable code; input-output circuitry; and at least one sensor operably coupled to the display.

In another embodiment, a self-contained small avionics system is disclosed. The self-contained small avionics system may include at least one display including one or more processors; a nonvolatile memory including executable code; input-output circuitry; an integrated modular avionics cabinet operably coupled to the display; at least one sensor; and at least one line replaceable unit; wherein the at least one sensor, and the at least one line replaceable unit are operably coupled to the integrated modular avionics cabinet.

In another embodiment, an environment may comprise a plurality of self-contained small vehicle systems, each of the self-contained small vehicle systems including: a display system having a display, a processor operably coupled to the display, and a nonvolatile memory including executable code operably coupled to the processor, and a sensor operably coupled to the display system.

In another embodiment, an environment may comprise: a first self-contained small vehicle system, the first self-contained small vehicle system including: a first display system having a first display, a first processor operably coupled to the first display, and a first nonvolatile memory including a first executable code operably coupled to the first processor, and a first sensor operably coupled to the first display system; and a second self-contained small vehicle system, independently operable from the first self-contained small vehicle system, the second self-contained small vehicle system including: a second display system having a second display, a second processor operably coupled to the second display, and a second nonvolatile memory including a second executable code operably coupled to the second processor, and a second sensor operably coupled to the second display system, wherein the second self-contained small vehicle system is redundant of the first self-contained small vehicle system.

In another embodiment, an environment may comprise: a plurality of self-contained small vehicle systems, each of the self-contained small vehicle systems including: a display system; modular avionics cabinet; a line replaceable unit; and a sensor operably coupled to the display system, wherein each of the plurality of self-contained small vehicle systems is configured to be redundant to each other.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary view of an aircraft cockpit, according to one aspect of the present disclosure.
FIG. 2 depicts an exemplary self-contained small avionics environment, according to one aspect of the present disclosure.
FIG. 3 depicts an exemplary self-contained small avionics environment for larger aircraft, according to one aspect of the present disclosure.
FIG. 4 depicts an exemplary computer device or system, in which embodiments of the present disclosure, or portions thereof, may be implemented

### DETAILED DESCRIPTION OF EMBODIMENTS

Avionics systems are complex and go through stringent certification processes before the systems can be installed on any approved aircraft. As the size of the aircraft increases, redundancy is required to meet the more strict safety requirements on avionics systems installed on an aircraft. However, with redundancy, the complexity of the avionic systems to be installed on an aircraft increases exponentially, which may result in increases in cost and time of development and certification of the avionics systems. Therefore, a need exists for avionics systems to satisfy redundancy and safety requirements, while also reducing development cost and time.

The present disclosure describes self-contained small vehicle/avionics systems that may be installed in multiple sets to provide redundancy without the complexity of system automation and fault management. Such systems may lead to decreases in the complexity of the system's certification. The self-contained small avionics system may have less equipment, less wiring, and less complexity, while continuing to provide the appropriate level of safety and advanced cockpit functionality. The self-contained small avionics system may include one instance of all required functionality and sensors. The self-contained small avionics system may be certified for the appropriate class of aircraft for which it is designed. For higher class of aircraft, one or more self-contained small avionics systems may be installed depending on the requirements for the class of aircraft. The self-contained small avionics system may obviate the need for standby equipment by providing the appropriate redundancy, and may reduce the effort needed for certification due to the fact that one or more of the same small avionics systems may be installed to meet the redundancy requirements driven by the higher level of safety.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The term "or" is meant to be inclusive and means either, any, several, or all of the listed items. The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. Relative terms, such as, "substantially" and "generally," are used to indicate a possible variation of ±10% of a stated or understood value.

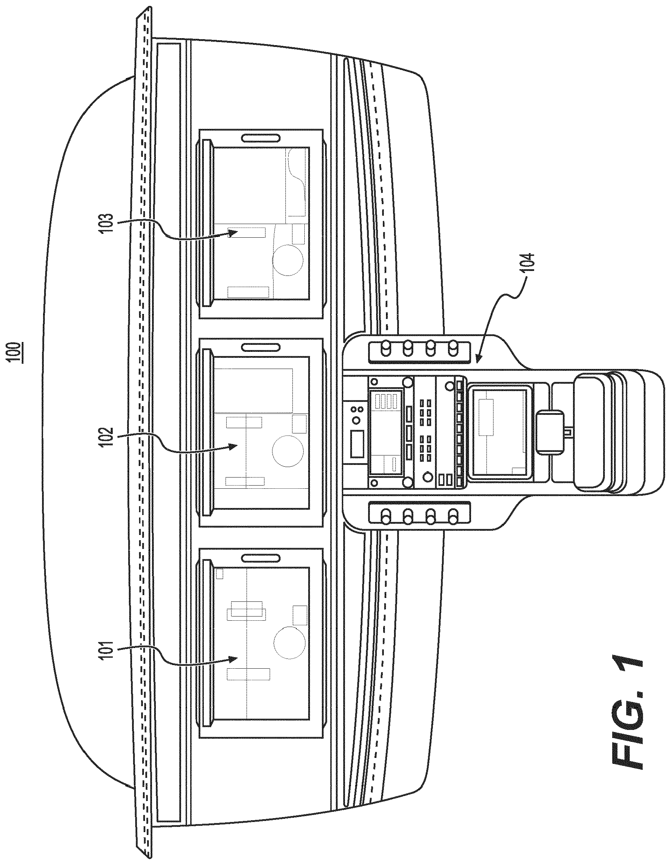

Referring now to the appended drawings, FIG. 1 shows an exemplary view 100 of an aircraft cockpit utilizing the self-contained small avionics system. Although avionics systems are referenced herein, it will be appreciated that the principles and systems described below may be used in other vehicle systems.

The exemplary cockpit view 100 may include self-contained small avionics systems 101-103, and flight controls 104. Each self-contained small avionics system 101-103 may include one instance of all required processors, functionality, and sensors powered by battery electrical bus. As can be seen in cockpit view 100, the self-contained small avionics system may each contain an independent display, and each display may have a number of resolution settings, for example 1080p, near 4K, 4K, etc. The display may display a variety of flight information. For example, the display may display an attitude director indicator (ADI), a horizontal situation indicator (HSI), Heading (HDG), synthetic vision, navigation information, communication information, and autopilot modes. The display may also display at least one flight director. For example, the display may serve as any one or a combination of a primary flight display (PFD), Co-Pilot PFD, and multi-function display (MFD). Each of the self-contained small avionics system may also include wireless communication modules, suc as wireless internet (WiFi) and Bluetooth access points, which may be connected to ground control via multi-band voice-data gateway (e.g., WiFi, 4G network, 5G network, satellite network, or other suitable network).

As indicated above, FIG. 1 is provided merely as an example. Other examples are possible and may differ from what was described with regard to FIG. 1. The number and arrangement of devices and networks shown in FIG. 1 are provided as an example. In practice, there may be additional devices, fewer devices, and/or networks, different devices and/or networks, or differently arranged devices and/or networks than those shown in FIG. 1. Additionally, or alternatively, a set of devices (e.g., one or more devices) of environment 100 may perform one or more functions described as being performed by another set of devices of environment 100.

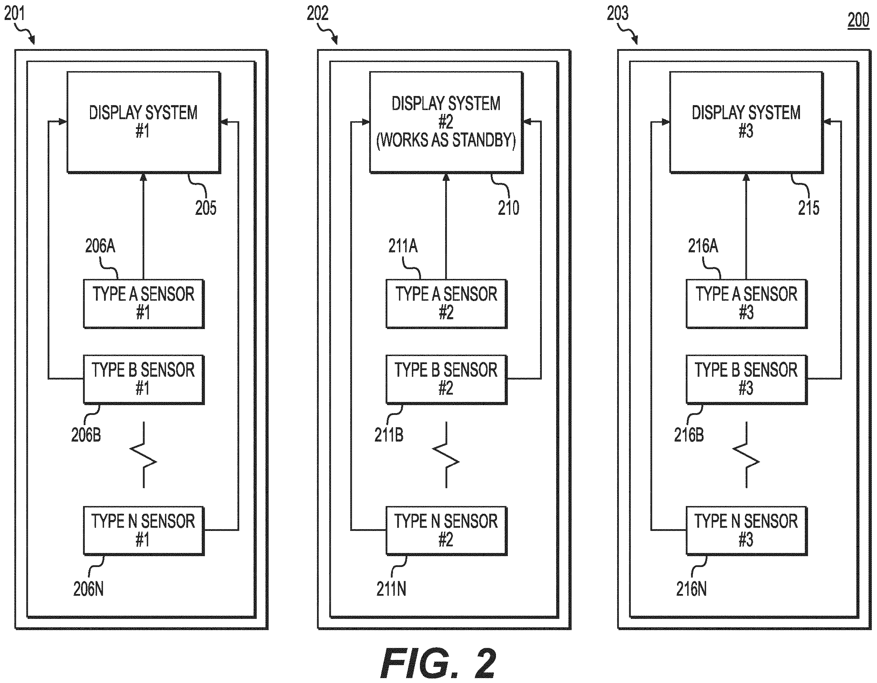

FIG. 2 depicts an exemplary self-contained small avionics environment 200, according to one aspect of the present disclosure. As depicted in FIG. 2, self-contained small avionics environment 200 may include three individual self-contained small avionics systems 201-203. The exemplary environment 200 may be designed for part 23 class III aircrafts, for example. The three individual self-contained small avionics systems 201-203 may correspond to the self-contained small avionics systems 101-103 as depicted in FIG. 1. Self-contained small avionics systems 201-203 may each function independently of one another.

Each individual self-contained small avionics system 201-203 may contain independent and dissimilar sensors and processors for all required functionality. Each self-contained small avionics system 203 may have the same configuration, such that environment 200 includes three copies (small avionics systems 201-203) of a self-contained, fully functional avionics system. Self-contained small avionics systems 201-203 may provide redundancy.

For example, self-contained small avionics system 201 may include a display system 205 and sensors 206A-206N. The display system 205 may comprise a smart display which may include display circuitry, processor, and memory. The memory may include nonvolatile memory including executable code (e.g., software). The display system 205 may also include the display, a modular avionics unit (MAU), and a generator control unit (GCU). Sensors 206A-206N may be configured to measure one or more parameters. For example, Sensors 206A-206N may include inertial sensor, air data sensor, weather radar, angle of attack sensor, and radio altimeter. Sensors 206A-206N may be operably connected to display system 205, such that information from sensors 206A-206N may be stored in the memory, analyzed by the processor, and/or displayed on the display. Display system 205, or other portions of self-contained small avionics system 201, may also include input-output circuitry, examples of which are described below.

Self-contained small avionics system 202 may have any of the properties of self-contained small avionics system 201. For example, self-contained small avionic system 202 may include a display system 210, and sensors 211A-211N. The display system 210 may also include the display, the modular avionics unit (MAU), and the generator control unit (GCU). Sensors 211A-211N may include inertial sensor, air data sensor, weather radar, angle of attack sensor, and radio altimeter. In one embodiment where multiple self-contained small avionics systems are installed, the display system 210 may serve as a standby display system.

Self-contained small avionics system 203 may have any of the properties of self-contained small avionics systems 201 and/or 202. For example, self-contained small avionics systems 203 may include a display system 215, and sensors 216A-216N. The display system 215 may also include the display, the modular avionics unit (MAU), and the generator control unit (GCU). Sensors 216A-216N may include inertial sensor, air data sensor, weather radar, angle of attack sensor, and radio altimeter.

The number and arrangement of modules, devices, and networks shown in FIG. 2 are provided as an example. In practice, there may be additional modules and devices, fewer modules, devices and/or networks, different modules, devices and/or networks, or differently arranged modules, devices and/or networks than those shown in FIG. 2. Furthermore, two or more devices included in environment 200 of FIG. 2 may be implemented within a single device, or a single device in the environment 200 of FIGS. 2 may be implemented as multiple, distributed devices. Additionally, or alternatively, a set of devices (e.g., one or more devices) of environment 200 may perform one or more functions described as being performed by another set of devices of environment 200.

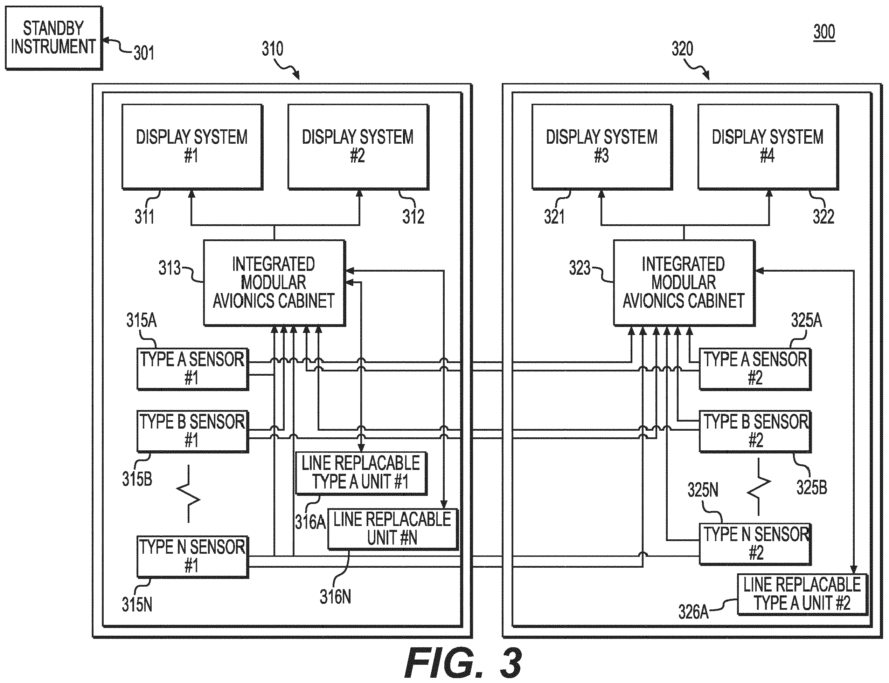

FIG. 3 depicts an exemplary self-contained small avionics environment 300 for larger aircrafts, according to one aspect of the present disclosure. As depicted in FIG. 3, self-contained small avionics environment 300 may include one standby instrument 301, and a plurality of individual self-contained small avionics systems. For example, as shown in FIG. 3, environment 300 may include two self-contained small avionics systems 310 and 320. However, an alternative number of small avionics systems may be utilized. The exemplary environment 300 may be designed for part 23 class IV aircrafts, for example.

Each individual self-contained small avionics systems 310 and 320 may have any of the properties of self-contained small avionics systems 101-103, as depicted in FIG. 1, or self-contained small avionics systems 201-203, as depicted in FIG. 2. Each individual self-contained small avionics system 310 and 320 may contain independent and dissimilar sensors and processors for all required functionality. For example, self-contained small avionics systems 310 may include display systems 311 and 312, integrated modular avionics cabinet 313, sensors 315A-315N, and line replaceable unit (LRU) 316A and 316N.

The display system 311 and 312 may also include the display, the modular avionics unit (MAU), and the generator control unit (GCU). Similarly, the self-contained small avionics systems 320 may include display systems 321 and 322, integrated modular avionics cabinet 323, sensors 325A-325N, and line replaceable unit (LRU) 326A. The display system 321 and 322 may also include the display, the modular avionics unit (MAU), and the generator control unit (GCU).

Integrated modular avionics cabinet 313 and 323 may include various avionics computers in one chassis. The avionics computers may provide functions related to autopilot, flight management, terrain database generation, etc. As shown in FIG. 3, sensors 315 may be in communication with modular avionics cabinet 323 of small avionics system 320, in addition to being in communication with modular avionics cabinet 313 of small avionics system 310, which may provide further redundancy. Similarly, sensors 325 may be in communication with modular avionics cabinet 313 of small avionics system 310, in addition to being in communication with modular avionics cabinet 323 of small avionics system 320

Sensors 315A-315N and 325A-325N may have various functions and measure various parameters. For example, Sensors 315A-315N and 325A-325N may each include an inertial sensor, an air data sensor, weather radar, an angle of attack sensor, and/or a radio altimeter. As shown in FIG. 3, each of small avionics systems 310 and 320 may include a "Type A" sensor 315A/325A - "Type N" sensor 315N/325N. Each sensor of a particular type may have the same configuration and may measure the same parameter. Thus, small avionics systems 310 and 320 may have duplicative sensors to provide redundancy on an aircraft other vehicle.

While environment 300 depicts line replicable unit type A (LRU) 316A and 326A, and line replicable unit (LRU) 316N, the environment 300 may have additional line replicable unit types and additional line replaceable units. Alternatively, environment 300 may lac LRUs.

The number and arrangement of modules, devices, and networks shown in FIG. 3 are provided as an example. In practice, there may be additional modules and devices, fewer modules, devices and/or networks, different modules, devices and/or networks, or differently arranged modules, devices and/or networks than those shown in FIG. 3. Furthermore, two or more devices included in environment 300 of FIG. 3 may be implemented within a single device, or a single device in the environment 300 of FIGS. 3 may be implemented as multiple, distributed devices. Additionally, or alternatively, a set of devices (e.g., one or more devices) of environment 300 may perform one or more functions described as being performed by another set of devices of environment 300.

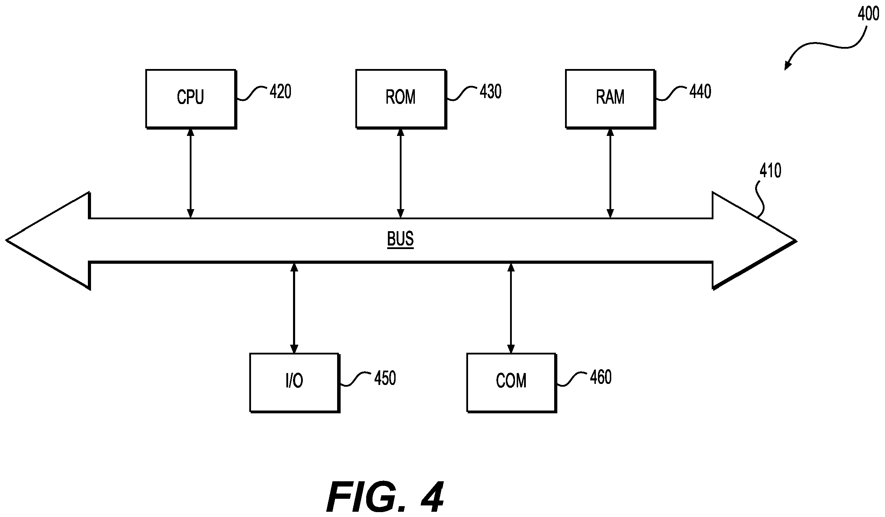

FIG. 4 depicts a high-level functional block diagram of an exemplary computer device or system, in which embodiments of the present disclosure, or portions thereof, may be implemented, e.g., as computer-readable code. In some implementations, the self-contained small avionics system 201-203 (depicted in FIG. 2) may correspond to device 400. Additionally, self-contained small avionics system 310 and 320 may each correspond to device 400. Additionally, each of the exemplary computer servers, databases, user interfaces, and modules described above with respect to FIGS. 1-3 can be implemented in device 400 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-3.

If programmable logic is used, such logic may be executed on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device.

For instance, at least one processor device and a memory may be used to implement the above-described embodiments. A processor device may be a single processor or a plurality of processors, or combinations thereof. Processor devices may have one or more processor "cores."

Various embodiments of the present disclosure, as described above in the examples of FIGS. 1-3, may be implemented using device 400. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG. 4, device 400 may include a central processing unit (CPU) 420. CPU 420 may be any type of processor device including, for example, any type of special purpose or a general-purpose microprocessor device. As will be appreciated by persons skilled in the relevant art, CPU 420 also may be a single processor in a multi-core/multiprocessor system, such system operating alone, or in a cluster of computing devices operating in a cluster or server farm. CPU 420 may be connected to a data communication infrastructure 410, for example, a bus, message queue, network, or multi-core message-passing scheme.

Device 400 also may include a main memory 440, for example, random access memory (RAM), and also may include a secondary memory 430. Secondary memory 430, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 430 may include other similar means for allowing computer programs or other instructions to be loaded into device 400. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 400.

Device 400 also may include a communications interface ("COM") 460. Communications interface 460 allows software and data to be transferred between device 400 and external devices. Communications interface 460 may include a modem, a network interface (such as an Ethernet card), a communications port, a PCMCIA slot and card, or the like. Software and data transferred via communications interface 460 may be in the form of signals, which may be electronic, electromagnetic, optical, or other signals capable of being received by communications interface 460. These signals may be provided to communications interface 460 via a communications path of device 400, which may be implemented using, for example, wire or cable, fiber optics, a phone line, a cellular phone link, an RF link or other communications channels.

The hardware elements, operating systems, and programming languages of such equipment are conventional in nature, and it is presumed that those skilled in the art are adequately familiar therewith. Device 400 also may include input and output ports 450 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. An environment comprising:
a plurality of self-contained small vehicle systems, each of the self-contained small vehicle systems including:
a display system having a display, a processor operably coupled to the display, and a nonvolatile memory including executable code operably coupled to the processor, and
a sensor operably coupled to the display system.

2. The environment of claim 1, wherein the environment includes at least three self-contained small vehicle systems.

3. The environment of claim 1, wherein each of the self-contained small vehicle systems operates independently of the other self-contained small vehicle systems.

4. The environment of claim 1, wherein the sensor of a first of the plurality of the self-contained small vehicle systems is in communication with a component of a second of the plurality of the self-contained small vehicle systems.

5. The environment of claim 4, wherein the component is a modular avionics cabinet.

6. The environment of claim 1, wherein the sensor is at least one of an inertial sensor, air data sensor, weather radar sensor, angle of attack sensor, and radio altimeter.

7. The environment of claim 1, wherein the display system of one of the plurality of self-contained small vehicle systems serves as a standby display system.

8. The environment of claim 1, wherein each of the plurality of self-contained small vehicle systems further includes a modular avionics unit.

9. The environment of claim 1, wherein each of the plurality of self-contained small vehicle systems further includes a generator control unit.

10. The environment of claim 1, wherein the sensor of each of the plurality of self-contained small vehicle systems is configured to measure the same parameter.

11. The environment of claim 1, wherein the display is at least one of primary flight display, co-pilot primary flight display, or multi-function display.

12. An environment comprising:
a first self-contained small vehicle system, the first self-contained small vehicle system including:
a first display system having a first display, a first processor operably coupled to the first display, and a first nonvolatile memory including a first executable code operably coupled to the first processor, and
a first sensor operably coupled to the first display system; and
a second self-contained small vehicle system, independently operable from the first self-contained small vehicle system, the second self-contained small vehicle system including:
a second display system having a second display, a second processor operably coupled to the second display, and a second nonvolatile memory including a second executable code operably coupled to the second processor, and
a second sensor operably coupled to the second display system,
wherein the second self-contained small vehicle system is redundant of the first self-contained small vehicle system.

13. The environment of claim 12, further comprising:
a third self-contained small vehicle system, the third self-contained small vehicle system including:
a third display system having a third display, a third processor operably coupled to the third display, and a third nonvolatile memory including a third executable code operably coupled to the third processor, and
a third sensor operably coupled to the third display system,
wherein the third self-contained small vehicle system is redundant of the first self-contained small vehicle system.

14. The environment of claim 12, wherein the first sensor and the second sensor are at least one of an inertial sensor, air data sensor, weather radar sensor, angle of attack sensor, and radio altimeter.

15. The environment of claim 12, wherein the second display system serves as a standby display system.
